(19) Europäisches Patentamt
European Patent Office
Office européen des brevets

(11) **EP 1 759 166 B1**

(12) **EUROPÄISCHE PATENTSCHRIFT**

(45) Veröffentlichungstag und Bekanntmachung des Hinweises auf die Patenterteilung:
**19.03.2008 Patentblatt 2008/12**

(51) Int Cl.:
***G01B 11/00*** *(2006.01)*   ***G01B 21/04*** *(2006.01)*

(21) Anmeldenummer: 05759088.7

(86) Internationale Anmeldenummer:
**PCT/DE2005/001048**

(22) Anmeldetag: **11.06.2005**

(87) Internationale Veröffentlichungsnummer:
**WO 2005/124276 (29.12.2005 Gazette 2005/52)**

(54) **VERFAHREN ZUR VERMESSUNG VON GEGENSTÄNDEN MIT EINER HERKÖMMLICHEN DIGITALKAMERA**

METHOD FOR THE MEASUREMENT OF OBJECTS WITH THE AID OF A CONVENTIONAL DIGITAL CAMERA

PROCEDE POUR MESURER DES OBJETS AU MOYEN D'UNE CAMERA DIGITALE DU TYPE STANDARD

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **15.06.2004   DE 102004028635**

(43) Veröffentlichungstag der Anmeldung:
**07.03.2007   Patentblatt 2007/10**

(73) Patentinhaber: **Burkhard, Heins**
**31542 Bad Nenndorf (DE)**

(72) Erfinder: **Burkhard, Heins**
**31542 Bad Nenndorf (DE)**

(74) Vertreter: **Junius, Walther**
**Wolfstrasse 24**
**D-30519 Hannover (DE)**

(56) Entgegenhaltungen:
**EP-A- 1 174 681**        **US-A- 5 852 672**

• **HEIKKILA J ET AL: "Calibration procedure for short focal length off-the-shelf CCD cameras" PROCEEDINGS OF THE 13TH INTERNATIONAL CONFERENCE ON PATTERN RECOGNITION IEEE COMPUT. SOC. PRESS LOS ALAMITOS, CA, USA, Bd. 1, 1996, Seiten 166-170 vol.1, XP002350077 ISBN: 0-8186-7282-X**
• **PATENT ABSTRACTS OF JAPAN Bd. 2003, Nr. 12, 5. Dezember 2003 (2003-12-05) -& JP 2003 329423 A (SANYO ELECTRIC CO LTD), 19. November 2003 (2003-11-19)**

EP 1 759 166 B1

## Beschreibung

Die Erfindung betrifft ein Verfahren zur Vermessung von Gegenständen mit einer Kamera durch Aufnahme und späterer Auswertung einer Serie von Objektaufnahmen aus mindestens zwei verschiedenen Richtungen.

Zur Vermessung von Gegenständen mit einer Kamera durch Aufnahme einer Serie von Bildern aus verschiedenen Richtungen und deren späteren Auswertung ist es bekannt, sehr teure Spezialkameras zu verwenden. Diese Kameras sind sogenannte metrische bzw. teilmetrische Kameras, die mit einem Objektiv fester Brennweite arbeiten, das vom Hersteller werksseitig kalibriert worden ist. Eine Kalibrierung des Objektivs kann nur für eine jeweils bestimmte Brennweite vorgenommen werden. Um der Größe des zu vermessenden Objektes und den Anforderungen an die Messgenauigkeit gerecht zu werden, müssen verschiedene Objektive mit unterschiedlichen Objektivbrennweiten eingesetzt werden. Daher müssen Kameras mit austauschbaren Objektiven zur Vermessung verschieden großer Objekte verwendet werden. Dieses ist in der Anschaffung teuer und während des Vermessungseinsatzes durch den Objektivwechsel und der stationären Bestimmung der Kamerakalibrierung und der Objektivverzeichnung zudem zeitaufwändig. Der vom Hersteller betriebene Aufwand für die Herstellung des Kameragehäuses, des speziellen CCD-Chips und dessen Aufhängung an der Gehäuserückwand ist groß und auch Grund für den hohen Preis einer solchen Fachkamera. Dieses trifft um so mehr für Luftbildkameraaufnahmesysteme zu. Zur Auswertung dieser bekannten Systeme werden Stereo-Auswertegeräte benötigt, die sehr kostspielig in der Anschaffung sind.

Ebenfalls bekannte und in der Anschaffung sehr teure Vermessungssysteme sind die 3D-Laserscannervermessung, bei der auf das zu vermessende Objekt direkt Passpunkte aufzubringen sind und photogrammetrische Systeme, die auf eine Streifenprojizierung angewiesen sind. Das ist zeitaufwändig und schränkt die zur Vermessung geeigneten Objekte ein.

Die Erfindung vermeidet die Nachteile des Standes der Technik. Es ist die Aufgabe der Erfindung, mit einfachen Mitteln eine Möglichkeit zu schaffen, die Vermessung vom Boden (Nahbereichsphotogrammetrie) und aus der Luft (Luftbildphotogrammetrie) mit handelsüblichen, nicht werksseitig kalibrierten Kameras durchzuführen, wie sie derzeit für den Privatbedarf Überall zu niedrigen Preisen erhältlich sind. Zur Auswertung der Vermessungsaufnahmen sollen keine hochpreisigen Spezialauswertegeräte benötigt werden.

US-A-5 852 672 beschreibt ein Verfahren zur Vermessung von Objekten mit einer Stereokamera durch Aufnahme und späteren Auswertung einer Serie von Objektaufnahmen. Dabei wird die Stereokamera in einem ersten Schritt kalibriert, so dass Objektivverzeichnung, Bildhauptpunktlage und Brennweite beider Kameras der Stereokamera bekannt sind.

EP-A-1 174 681 beschreibt ein Verfahren zur Vermessung von Objekten mit einer herkömmlichen Digitalkamera durch Aufnahme und späteren Auswertung einer Serie von Objektaufnahmen aus mindestens zwei verschiedenen Richtungen. Das Objekt wird zusammen mit Positionsmarken aufgenommen. Die Kamera muss vorangehend kalibriert werden, so dass Bildhauptpunktlage und Brennweite der Kamera bekannt sind.

Im Artikel "Calibration Procedure for Short Focal Length Off-The-Shelf CCD-Cameras" von J. Heikkila und O. Silven (Proceedings of the 13th International Conference on Pattern Recognition, Wien, 1996, Seiten 166 bis 170) ist die Kalibrierung einer herkömmlichen Digitalkamera mit Hilfe eines würfelförmigen Kalibrierkörpers beschrieben. Dabei wird die Kamera bezüglich Brennweite und Bildhauptpunktlage kalibriert.

Die Erfindung besteht in einem Verfahren zur Vermessung von Objekten mit einer Kamera durch Aufnahme und spätere Auswertung einer Serie von Objektaufnahmen aus mindestens zwei verschiedenen Richtungen, bei dem

- man mindestens eine herkömmliche Digitalkamera mit Vario- bzw. Zoomobjektiv als Aufnahmesystem verwendet;
- man die Objektivverzeichnung und die Bildhauptpunktlage mit einer Kalibriertafel ermittelt;
- man mit diesem Aufnahmesystem das Objekt gleichzeitig mit einem Passpunktkoordinatensystem aufnimmt, das mindestens sechs gut verteilte und räumlich angeordnete Passpunkte aufweist;
- man die Brennweite ermittelt, indem man ausgehend vom verwendeten Wert der Brennweite die Brennweite rechnerisch in kleinen Schritten sukzessive erhöht bzw. erniedrigt, die jeweils resultierende Standardabweichung an den Passpunkten ermittelt und diejenige Brennweite ermittelt, bei der die Standardabweichung ihren kleinsten Wert erreicht; und
- man unter Berücksichtigung der ermittelten Brennweite, Objektivverzeichnung und der Bildhauptpunktlage das zu vermessende Objekt vermisst.

Zur Erhöhung der Genauigkeit ist es vorteilhaft, wenn man vor der Vermessung einmalig die Objektivverzeichnung und den Bildhauptpunkt der verwendeten Kamera für die zu verwendenden Brennweiten ermittelt.

Besonders zweckmäßig ist es, wenn man die Ermittlung der Brennweite, der Objektivverzeichnung, der Bildhauptpunktlage und/oder die Auswertung der Daten auf einem Computer mit einer prozesssteuernden Software vornimmt. Auf diese Weise ist es ermöglicht, mit einer handelsüblichen Standardkamera kleine und auch große Objekte ohne Objektivwechsel photogrammetrisch zu vermessen und zu hochgenauen Vermessungsergebnissen zu gelangen.

Da hier nur ein einziges Objektiv verwendet wird, das im Gegensatz zum Stand der Technik ein Varioobjektiv ist, kann der Nutzer dieser Kamera die für seine Objektabbildung optimale Brennweite stufenlos einstellen. Es entfällt ein zeitintensiver Objektivwechsel. Mit diesem Verfahren gelingt es erheblich schneller und kostengünstiger, die zur Vermessung notwendige Aufnahmeserie zu erstellen, die wegen des stufenlosen Einsatzes des Varioobjektives auf nur wenige Bildaufnahmen beschränkt ist.

Es entfällt der hohe zeitliche und finanzielle Aufwand einer werksseitigen Gesamtkalibrierung der Kamera. Das gelingt dadurch, dass die Kalibrierung der Kamera sowie die Ermittlung der Objektiverzeichnung nicht mehr im Herstellungswerk, sondern innerhalb jeder Vermessungsaufnahmeserie erfolgen kann. Vorteilhafterweise kann diese Kalibrierung innerhalb jeder der Vermessung im Computer (‚calibration on the job') zuzuführenden Aufnahmeserie erfolgen. Daher sind an der Kamera auch keine besonderen Maßnahmen zur Vermeidung negativer Umweltfaktoren oder technische Umbauten vorzunehmen.

Die Objektvermessung, eine Konturendigitalisierung oder die Ableitung einer Oberflächenpunktewolke kann nun an der direkten, realen räumlichen Ansicht von allen fotografierbaren Objekten bzw. Flächen und Situationen unter Beibehaltung von deren Eigenschaften, wie beispielsweise deren Objektoberflächen farbstrukturen und Schattenstrukturen, durchgeführt oder durch Export einer Oberflächenpunktwolke, mit oder ohne Konturendigitalisierung an externe Applikationen für weitere Anwendungen übergeben werden. Dieses ist gegenüber dem bekannten 3D-Laserscanningverfahren vorteilhaft, bei dem die realen Objektoberflächenfarbstrukturen verloren gehen. Denn deren Darstellungen sind Pseudo-3D-Darstellungen einer schattierten Farbstufe.

Als Kameras können eine herkömmliche Kamera, Digitalkamera, Videokamera bzw. Camcorder oder andere Objektaufnahmesysteme, wie z.B. Film- und Fernsehkamera, Mikroskopkamera, Rasterelektronenmikroskopbildaufnahmesysteme, Endoskopsystemkameras auch für die CAD-Vermessungs-und Digitalisierfunktionalität, verwendet werden.

Das Passpunktkoordinatensystem dient als Messvolumen und ist mit definierten, geometrisch exakt angeordneten und einmalig eingemessenen Passpunkten ausgestattet, um definierte Raumkoordinaten in x-, y- und z-Richtung zu liefern. Bei terrestrischen Flächen sind dieses Hoch- und Rechtswerte oder über das GPS ermittelte Koordinaten. Das Messvolumen dient als Kalibriervorlage für die Kamerakalibrierung und als exakte Grundlage für die Objektvermessung.

Als Passpunktkoordinatensystem kann man für kleine Objekte auf einem Objektträger angeordnete Passpunktfestkörper zum Aufspannen eines Messvolumens verwenden oder für kleinste Objekte dreidimensionale in ihren Abmaßen bekannte Mikrokörper oder Nanostrukturen ggfs. in Kombination mit Rasterlinien unterschiedlicher Maßstäbe, für mittelgroße bis große Objekte einen mit Messmarken versehenen Kalibrierkäfig oder ein mit Messmarken versehenes dreistrahliges Koordinatengestell und für terrestrische und atmosphärische Objekte Bodenmarkierungen in x-, y- Richtung und in z- Richtung definiert fliegende oder schwebende Objekte als kombiniertes Messvolumen verwenden.

Man geht folgendermaßen vor:
Kleinste Objekte werden zur Kameraaufnahme auf einen horizontalen Glasobjektträger gelegt, nachdem zuvor mit einer 3D-Kalibriermessplatte die Kalibrierung der Kameras und des Linsensystems eines (Stereo)mikroskops oder einer (Stereo)lupe bestimmt wurde. Diese 3D-Kalibriermessplatte weist definierte Raster aus x-/y-Rasterlinien sowie Mikrokörper auf, die im definierten Tiefenschärfebereich der Vergrößerungsstufe liegen und die z-Koordinate liefern. Es kann auch ein Nanostrukturkörper, beispielsweise ein Kristallgitter mit bekannten Gitterstrukturmaßen, als Kalibrier- und Messvolumen dienen.

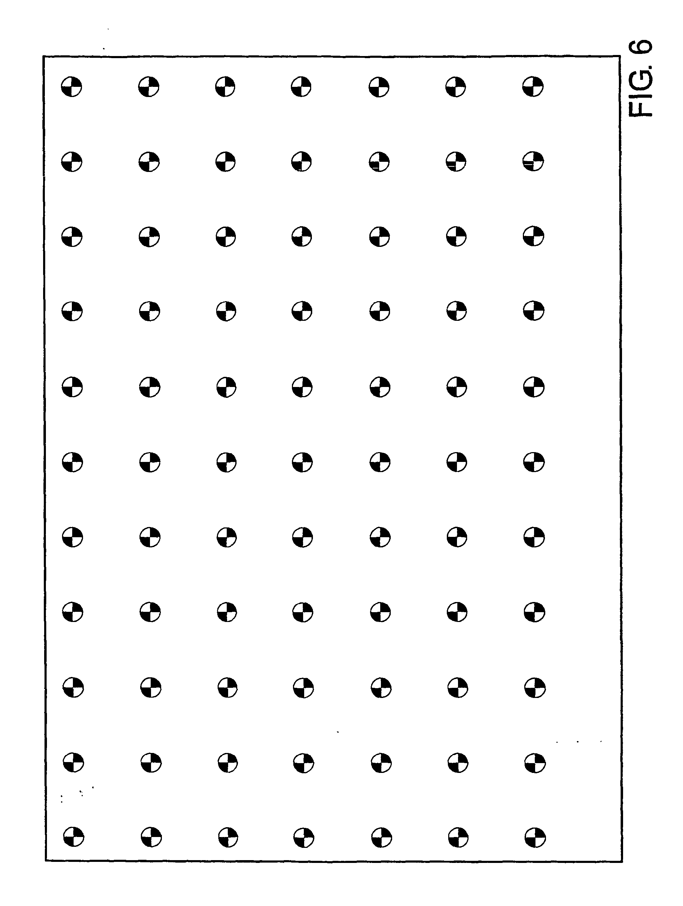

Kleine Objekte werden mit einem Passpunktkoordinatensystem, bestehend aus einer das Objekt tragenden horizontalen Objektplattform und einer an der hinteren Kante der Objektplattform angeordneten vertikalen Objektträgerrückwand, auf denen Passpunktfestkörper zum Aufspannen eines Messvolumens angeordnet sind, fotografiert. Diese Anordnung kann vorab als Kalibrierstation für die Kamera dienen, indem die Objektträgerückwand durch eine Kalibriertafel, später dargestellt in der Fig. 6, ausgetauscht wird.

Mittelgroße bis große Objekte werden in einen Messkäfig mit definiert angeordneten Passpunkten eingestellt oder werden mithilfe eines dreiachsigen, einen Raum aufspannenden, mobilen Koordinatengestelles mit einmalig eingemessenen Messmarken als Messvolumen zur Vermessung aufgenommen. Die drei Achsen des Passpunktkoordinatengestelles können zusammensteckbar oder -klappbar angeordnet sein, um für den Transport zum nächsten Messeinsatz wiederverwendbar platzsparend zusammenlegbar zu sein.

Vorteilhaft ist es, wenn das Passpunktkoordinatensystem mobil und vor Ort an dem zu vermessendem Objekt einzusetzen ist. So muss nicht das zu vermessende Objekt in ein Labor transportiert werden, wodurch das Objekt beschädigt werden könnte und was unnötig zeitaufwendig ist.

Die Aufnahmen können vor Ort (auch freihändig) getätigt werden. Das zu vermessende Objekt muss nicht direkt mit Passpunkten bzw. Messmarken markiert werden.

Das mobile Passpunktkoordinatensystem (Messvolumen) kann auch durch Flugobjekte gestellt werden, die synchron, timergesteuert und mit einem Positioniersystem gekoppelt sind, um für Luft- und Satellitenbildaufnahmesysteme, ebenso für eine 3D-Vermessung von terrestrischen oder außerterrestrischen Flächen oder atmosphärischen Objekten (z.B. Wolken, Tornados) einsetzbar zu sein.

Der verfahrensgemäße Einsatz des mobilen Passpunktkoordinatensystems eignet sich auch im Natursteinabbau zur Berechnung des Absprengvolumens, der Absprengfläche und der Sprengbohrlochprofile, indem aus verfahrensgemäß aufgenommenen Fotos aus unterschiedlichen Richtungen die benötigten Koordinaten zu berechnen sind. Dabei bilden lotrechte Messlatten mit definiertem, eingemessenem Abstand das Messvolumen. Somit findet das erfindungsgemäße Verfahren bereits aus Arbeitssicherheitsgründen seine Berechtigung und wird von der BG-Natursteinabbau innerhalb eines digitalen fotografischen Bruchwand-Vermessungssystems empfohlen (Branchenversion). Dieses Verfahren hat zudem den Innovationsförderpreis 2005 von der BG in der Kategorie "Sicherheitstechnik" verliehen bekommen und ist mittlerweile als ein neues anerkanntes photogrammetrisches Messverfahren, neben der Laservermessung, bestätigt worden.

Durch das erfindungsgemäße Verfahren sind alle fotografierbaren Objekte unabhängig von deren Dimensionen, sowohl durch Einzelbilder als auch durch Filmsequenzen, in ihrer realen räumlichen Stereoansicht mit all ihren realen Oberflächen- und Schattenstrukturen und Farbschattierungen darstellbar und zusätzlich mit CAD-Funktionalität messtechnisch auswertbar und/oder digitalisierbar. Durch die freie Wahl der Kamera sind mit diesem Verfahren neue Anwendungsgebiete der photogrammetrischen Vermessung erschlossen.

Für die Vermessung von sich bewegenden Objekten ist es zweckmäßig, ein Zwei-Kamerasystem zu verwenden. Dabei nimmt man mit den beiden Kameras eine Videosequenz oder eine dicht hintereinander liegende Einzelbildfolge auf und sucht aus dieser ein korrespondierendes Bildpaar für die Vermessung heraus, welches auch der Kalibrierung zugrunde gelegt wird.

Besonders vorteilhaft ist es, wenn man dreidimensionale Messmarken verwendet. Diese können keil- oder kugelförmig ausgebildet sein. Wenn man würfelförmige Passpunktfestkörper als Messmarken verwendet, die definierte Markierungen auf den Festkörperflächen besitzen, können die Koordinaten eines Passpunktfestkörpers sehr exakt bestimmt werden.

Die mehrflächigen Passpunktfestkörper können bei Rundum-Aufnahmen auch mit Kugeln kombiniert bzw. getauscht werden, auch sind geometrisch exakte karierte Linien geeignet, allerdings ergibt sich bei kugelförmigen Passpunktfestkörpern lediglich nur eine Anmessung zur Ermittlung der Passpunktkoordinate, dafür sind sie in Luftbildaufnahmen gleichzeitig verwendbar, bei den mehrflächigen Würfeln ein Mittelwert aus maximal drei Würfelflächenanmessungen je Passpunktfestkörper.

Wenn ein Objekt ohne eine Verdeckung durch am mobilen Passpunktkoordinatensystem angeordneten Messmarken aufgenommen werden soll, kann so vorgegangen werden, dass man zunächst mit zwei (Video)Kameras die Objektumgebung mit einem mobilen Passpunktkoordinatensystem zur Ermittlung von Objektiwerzeichnung, Brennweite und Bildhauptpunktlage aufnimmt, dass man anschließend das Passpunktkoordinatensystem entfernt und dann von den selben Standorten aus mit den selben Kameraeinstellungen das Objekt zur Vermessung bzw. als 3D-Video aufnimmt.

Zur besseren Kenntüchkeit des Aufnahmeobjektes im Rahmen der Korrelation innerhalb der beiden Objektaufnahmen ist es zweckmäßig, wenn man bei einer strukturarmen Oberfläche des zu vermessenden Objektes (Gegenstandes) diese Oberfläche vor der Vermessung zur besseren Erkennbarkeit behandelt oder eine Struktur auf die Oberfläche projiziert.

Bei der Vermessung von sich bewegenden Objekten ist es vorteilhaft, ein Aufnahmesystem zu verwenden, das aus zwei synchron geschalteten Kameras besteht und bei dem man vor der Objektaufnahme die Objektiwerzeichnung, Brennweite und die Bildhauptpunktlage und das Messvolumen ermittelt hat.

Bei der Vermessung eines ortsfesten oder sich bewegenden Objektes oder einer Situation mit einem sich bewegenden Aufnahmesystem ist es zweckmäßig, ein starres mobiles vorkalibriertes Aufnahmesystem zu verwenden, welches aus zwei synchron geschalteten Kameras besteht und bei dem man vor der Objektaufnahme die Objektiwerzeichnung, Brennweite und die Bildhauptpunktlage und das Messvolumen ermittelt hat.

Genauigkeiten

Die Genauigkeit des Messverfahrens lässt sich gemäß *Richtlinie VDI/VDE 2634 Blatt 1/2 v. 12.04.02 für Optische 3D-Messsysteme - Bildgebende Systeme mit punktförmiger Antastung* - bestimmen. Die Abnahmekriterien sind Längenmessabweichungen durch Abstandsmessungen an Endmaßobjekten in einem definierten Messvolumen.

Die Genauigkeiten die mit diesem Messverfahren zu erzielen sind, hängen von folgenden Parametern ab:

Pixelauflösung der Kamera, Qualität der Kamerakalibrierung sowie manuelle Messfehler und Geometrieverhältnisse bzgl. des Messvolumens (nicht beeinflussbar).

Die Messgenauigkeit kann wie im folgenden Beispiel abgeschätzt werden:

Die verwendete Kamera hat 3.2 Mio. Pixel (2048*1536 Pixel), das Objekt eine Länge von 200 mm und wird möglichst bildfüllend aufgenommen, so dass die 200 mm Länge von ca. 2000 Pixel erfasst wird. Hieraus resultiert zunächst eine Pixelgröße auf das Objekt bezogen von 0,1 mm.

Die Koordinatengenauigkeit kann über die Standardabweichung an den Passpunkten (äußere Orientierung) abgeschätzt werden - diese liegt bei günstiger Passpunktsituation und genauer Messung im Bereich von 1 Pixel, kann aber in ungünstigeren Fällen auch deutlich höher sein. Zu beachten ist schließlich auch die visuelle Einstellgenauigkeit in den Bildern, die je nach Kontrast und Zoom bei 0,25 Pixel liegt.

In unserem Beispiel ergibt sich die abgeschätzte Messgenauigkeit damit zu 0,1mm x 1 x 0,25 = 0,025 mm.

Zur Standardabweichung an den Passpunkten:

Angenommen, diese Werte liegen bei rund 5 $\mu$m und die Pixelgröße des Kamerasensors betrage 2,5 $\mu$m, dann liegt die Standardabweichung bei ca. 2 Pixel. Der dichteste Pixelrasterabstand einer Punktwolke, nach diesem Beispiel, beträgt dann 0,1 mm. Dieser Wert ist voreinstellbar und sollte mit Bedacht gewählt werden, da er die Kapazität des Rechners sprengen kann - eine Abstimmung mit externen Weiterverarbeitungsschritten eigener Applikationen ist zu empfehlen.

Allgemein also:

Messgenauigkeit [mm]=Pixelgröße am Objekt [mm] x mittlere Standardabweichung an den Passpunkten [pxl] x Einstellgenauigkeit im Bild [pxl].

Werden hochpräzise Messungen verlangt, sollte man gemäß vorab genannter Richtlinie vorgehen und mit z.B. einem Endmaß, einer Messlatte etc. neben dem Aufnahmeobjekt die Fotoserien aufnehmen. Vor Beginn der Objektvermessung die Abmaße des Endmaßes oder der Messlatte in der Stereobetrachtung messen, um dann den Grad der Abweichung zum SOLL - Endmaß zu bekommen. Die gleiche Abweichung trifft dann auch bei der Objektvermessung zu. Dieser IST-SOLL Vergleich wird nur einmalig durchgeführt, quasi zur Genauigkeitsbestimmung des Messvolumens sowie der Kameras (z.B. einer Bauteilvermessung), sofern das Messvolumen und die Kameras stabil bzw. unverrückbar bleiben und nur die Messobjekte getauscht werden.

Technische Grundlagen

Die Genauigkeiten, die bei der Ausmessung von Objekten in Bildern erzielt werden können, hängen unter anderem davon ab, wie genau die einzelnen nachstehend aufgeführten Kameraparameter bekannt sind und welche Konstanz diese aufweisen. Konstanz bezieht sich dabei auf den zeitlichen Aspekt, aber auch auf Umwelteinflüsse (Temperatur, Luftfeuchte).

In jedem Fall müssen für die photogrammetrische Auswertung der Bilder folgende Parameter bekannt sein:

- Größe des Sensors (Länge und Breite in Pixel)
- Pixelgröße [$\mu$m]
- Brennweite [mm]

Hinzu kommen zu Erhöhung der Genauigkeit:

- Lage des Bildhauptpunktes
- radial-symmetrische Objektiwerzeichnung

Weitere Einflussfaktoren sind u.a.:

- Planlage des Sensors
- Mechanische Stabilität der Kamera
- Weitere Komponenten der Objektiwerzeichnung

Dabei gelten folgende Zusammenhänge:

Die Größe des Sensors ist bekannt und konstant.
Die Pixelgröße ist konstant, aber in der Regel unbekannt, und muss zunächst ermittelt werden.

Die Brennweite ist bei Varioobjektiven nicht konstant und wird zusätzlich durch die Fokussierung beeinflusst. Die gewählte Brennweite wird heutzutage üblicherweise in der Bilddatei abgespeichert (EXIF-Format), dieser Wert ist jedoch nicht wirklich exakt.

Die Lage des Bildhauptpunktes ist nicht konstant, sondern u.a. von der Brennweite abhängig, und zunächst nicht bekannt. Ebenso ist die radial-symmetrische Objektiwerzeichnung von der gewählten Brennweite abhängig und muss durch eine Kalibrierung ermittelt werden.

Die weiteren aufgeführten Parameter werden nicht oder nur indirekt in das beschriebene Verfahren einbezogen. Bei metrischen Kameras sind sie bekannt.

Ermitteln der Pixelgröße

Da nicht nur die Pixelgröße allein, sondern das Verhältnis dieses Wertes zur Brennweite für die weitere Auswertung entscheidend ist, genügt es, für die Pixelgröße zunächst einen Näherungswert zu bestimmen. Dies geschieht nach der empirisch entwickelten Formel:

$$\text{Pixelgröße [µm]} = \frac{\text{Nominelle Sensordiagonale [Zoll]}}{\text{Sensordiagonale [Pixel]}} \times 17018 \qquad (1)$$

Wie bereits erwähnt, ist die Pixelgröße konstant - der ermittelte Wert kann demnach für alle Bilder als Näherung beibehalten werden.

Ermitteln der radial-symmetrischen Verzeichnung und des Bildhauptpunktes

Die radial-symmetrische Verzeichnung des Objektivs ist von der aktuellen Brennweite abhängig, bei identischer Brennweite jedoch weitgehend konstant. Aus diesem Grund kann die Verzeichnung einmalig für jede der gewünschten Brennweiten ermittelt und die daraus abgeleiteten Korrekturfunktionen für alle Bilder verwendet werden. Für diese einmalige Ermittlung der Verzeichnung wird eine spezielle 2D-Kalibriertafel (abgebildet in der Fig. 6) und Algorithmen zur Erfassung der Verzeichnung bzw. zum Aufstellen der Korrekturfunktion verwendet.

Die Kalibriertafel hat das Format A3 und besteht aus einem hochstabilen Material worauf das eigentliche Kalibrierfeld mit Zielmarken im definierten Abstand auflaminiert ist.

Diese Tafel ist mit den jeweiligen Brennweiten zu fotografieren in der Weise, dass sich die Kamera möglichst senkrecht zur Tafel befindet und diese möglichst flächendeckend abgebildet wird. Tafel und Kamera sind dabei sicher zu fixieren (Stativ), und es ist für eine gute Ausleuchtung zu sorgen.

Die vier in den Ecken gelegenen Zielmarken werden von Hand gemessen, alle übrigen automatisch. Die Ermittlung der radial-symmetrischen Verzeichnung verläuft dann wie folgt:

Für alle Zielmarken existieren die Sollkoordinaten. Die Marken werden als Passpunkte aufgefasst und mit Hilfe der Soll- sowie der gemessenen Koordinaten ein räumlicher Rückwärtsschnitt mit Ausgleichung (kleinste Quadrate) gerechnet. Ergebnis sind zunächst für jede Zielmarke die gemessenen bzw. die berechneten Bildkoordinaten. Aus diesen Werten kann sodann die Verzeichnung ermittelt werden.

Vorteile dieses Verfahrens:

- Es ist nicht zwingend nötig, dass sich die Kamera genau senkrecht über der Tafel befindet
- Es ist ebenfalls nicht zwingend nötig, dass sich die Kamera exakt über der Mitte der Tafel befindet
- Der Punkt in geringster Entfernung zur Bildmitte und mit minimaler Verzeichnung ist der Bildhauptpunkt, der also zugleich mit der Verzeichnung ermittelt wird.

Die Korrekturfunktion wird berechnet aus den Soll- bzw. Ist-Koordinaten der Zielmarken und ist ein Polynom 3. Grades:

$$f(r) = a_0 + a_1 r + a_2 r^2 + a_3 r^3 \qquad (2)$$

Ermitteln der Brennweite

Es wurde bereits darauf hingewiesen, dass nicht zwingend <u>beide</u> Parameter Pixelgröße und Brennweite hochgenau bekannt sein müssen, sondern lediglich das <u>Verhältnis beider Werte,</u> woraus sich der Öffnungswinkel des Objektivs ableitet.

Für die Pixelgröße wurde mit Formel (1) ein i.a. schon recht genauer Näherungswert bestimmt. Dieser wird im folgenden als konstant angesetzt und davon ausgehend die tatsächliche Brennweite in jedem Bild separat berechnet.

Für die photogrammetrische Auswertung muss ohnehin für jedes Bild die äußere Orientierung (Projektionszentrum, Rotationswinkel) bestimmt werden. Dieses geschieht durch die Messung von Passpunkten, deren Objektkoordinaten bekannt und die im Bild erkennbar sind.

Unter der Voraussetzung, dass hinreichend viele (mindestens 6), gut verteilte und räumliche angeordnete Passpunkte vorliegen, kann nicht nur die äußere Orientierung bestimmt werden. Die vorgegebene (in der Bilddatei abgespeicherte) Brennweite wird rechnerisch um einen bestimmten Bereich (z.B. ± 25 mm) verändert und die jeweils resultierende Standardabweichung an den Passpunkten ermittelt. Diejenige Brennweite, bei der die Standardabweichung ihren kleinsten Wert erreicht, ist dann die tatsächliche, bei der Aufnahme verwendete Brennweite.

Die Passpunktanordnung muss sich dabei an der Objektgröße orientieren. Allgemein gilt, dass der Passpunktverband (Messvolumen) das Objekt umschließen sollte, in jedem Fall aber nicht wesentlich kleiner als das Objekt sein darf.

Das Wesen der Erfindung ist nachstehend anhand von in den Zeichnungen schematisch dargestellten Ausführungsbeispielen näher erläutert. Die Gestaltung dieser Beispiele kann im Einzelfall variieren, weil sie auf die Objektdimensionen der Messobjekte und die vor Ort gegebenen Voraussetzungen angepasst werden. Es zeigen die:

Fig.1:     eine mobile Kalibrier- und 3D-Objektvermessungsstation mit Kalibriertafel (Fig. 6);
Fig.2:     einen Käfig zur Vermessung mittelgroßer Objekte;
Fig.3:     ein dreiachsiges Koordinatengestell zur Vermessung von Mittel- und Großobjekten;
Fig.4:     mehrflächige keilförmige 3D-Messmarkenflächen für die Passpunkbestimmung;
Fig.5:     keilförmige Messmarkentafeln für den Messkäfig und das Koordinatengestell;
Fig.6:     eine 2D-Kalibriertafel für die Ermittlung der Objektivverzeichnung (Fig. 7), der Bildhauptpunktlage, der Brennweite, der Kamerakalibrierung
Fig.7:     eine Kurve der radial-symmetrischen Verzeichnung
Fig.8:     eine 3D-Kalibriermessplatte in Planansicht.
Fig. 9:    eine 3D-Kalibriermessplatte (Maßstab überhöht) in Perspektivansicht

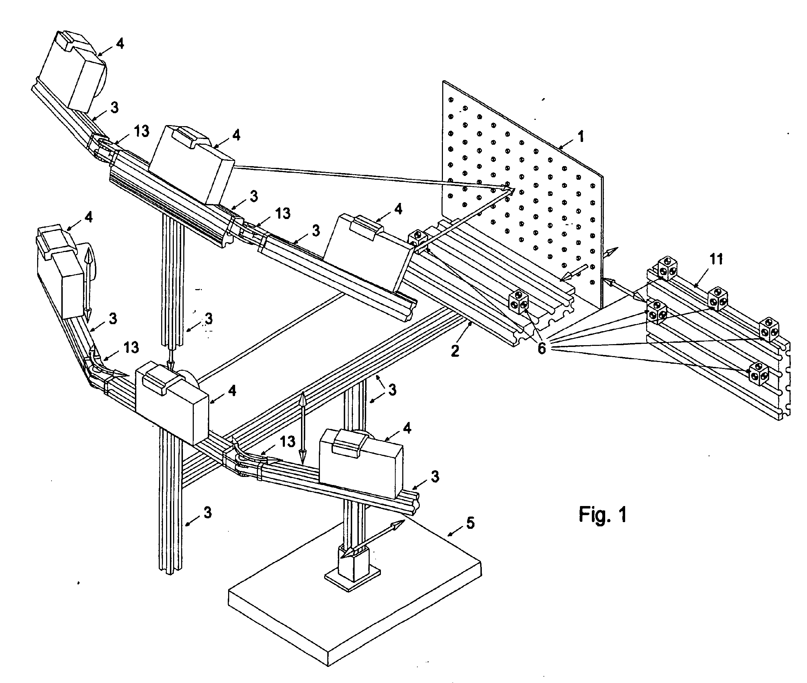

Die in Fig.1 gezeigte mobile Kalibrier- und Objektvermessungsstation 5 ist mit einer Kalibriertafel 1, einer Objektträgerplattform 2 und einer mit Spannbügelsätzen geometrisch exakten Trägerprofilkonstruktion 3 zur Montage von Kameras 4 für verschiedene Aufnahmerichtungen ausgerüstet. Der Objektträger 2 trägt das zu vermessende Objekt sowie mehrflächige Passpunktfestkörper 6 als mehrflächige Messmarken. Die Kalibriertafel 1 (in der Zeichnung an der hinteren Kante der Objektträgerplattform 2 angeordnet) und die Objekträgerrückwand 11 sind gegeneinander austauschbar anzuordnen. So ist mit dieser Station bei Anordnung der Kalibriertafel 1 die Kalibrierung einer Kamera vorzunehmen oder separat fotografiert, in dem die Kamera einzeln auf Stativ positioniert wird. Bei Anordnung der Objektträgerrückwand 11 sind Aufnahmen zur Vermessung des Objektes zu machen. Anstelle von würfelförmigen Messmarken oder Messmarkentafeln kann auch ein präzises kariertes Linienmuster auf dem Träger und der Rückwand aufgebracht oder sich kreuzende Laserlichtstrahlen als Koordinatenreferenz eingesetzt werden. Die Ausprägung des Messvolumens ist auf das zu vermessende Objekt anzupassen.

Erfindungsgemäß wird mindestens eine herkömmliche (Digital-) Kamera mit Vario- bzw. Zoomobjektiv als Aufnahmesystem verwendet, indem man mit diesem Aufnahmesystem das Objekt gleichzeitig oder nacheinander mit dem Passpunktkoordinatensystem als Messvolumen in einer Aufnahmeserie aus mindestens zwei Richtungen aufnimmt, indem man die Ermittlung der Brennweite, der Objektiwerzeichnung und der Bildhauptpunktlage aus dieser definierten Aufnahmeserie vornimmt und indem man unter Berücksichtigung der ermittelten Brennweite, der Objektiwerzeichnung und der Bildhauptpunktlage das zu vermessende Objekt vermisst.

Die Kalibriertafel 1, gezeigt in der Fig. 6, ist in dieser Objektvermessungsstation gegen die vertikale x/y-Ebene (Trägerrückwand 11) über einen Flansch austauschbar, sofern eine Kalibrierung durchgeführt werden soll. Die Kameras 4 sind über eine Schwenkvorrichtung 12 für Messaufnahmen kippbar. Über eine nicht dargestellte Kabelverbindung oder auch kabellos (z.B. W-LAN) werden die Daten der Aufnahmeserie einem ebenfalls nicht dargestellten Computer zugeführt und dort ausgewertet werden.

Die dem dargestellten Verfahren zugrundeliegenden Messvolumen sind generell für die photogrammetrische Rundum-Vermessung und zur vollautomatischen Kamerakalibrierung hergerichtet, wie auch zur Generierung von z.B. 3D-Videos mit Messfunktionalität, sofern man zwei Video-Kameras vorab kalibriert und synchron steuert. Diese Generierung wird z.B. über zwei so genannte Framegrabbereinheiten (Zusammenführung zweier Videosignale mit Generierung der Einzelbilder; je 25 Stück pro Sek., PAL) oder über zwei kaskadierte Videokameras am Fire-Wire-Anschluss, einem Hochgeschwindigkeitsrechner mit der Video-Engine-Einheit, zugeführt. Das Resultat ist derzeit ein Anagplyphenfilm und ein Shutterfilm, der von den Fernsehanstalten ausgestrahlt und an jedem Fernseher betrachtet werden kann. Mit einer Anaglyphenbrille (Rot-Grün; eingeschränktes Farbspektrum) oder einer sogenannten Shutterbrille (24 Bit Echtfarbfilm) können diese Filme in realer 3D-Ansicht betrachtet werden.

Das Messverfahren eignet sich unter anderem auch zur vollautomatischen Bauteilevermessung an industriellen Fertigungslinien, gekoppelt mit einem IST-SOLL Vergleich, z.B. für die Qualitätskontrolle im Warenverkehr im Qualitätsmanagement (gem. z.Zt. DIN EN ISO 9001). Das Messverfahren erfüllt die bereits vorab genannte Richtlinie *VDI/ IVDE 2634 Blatt 1/2.*

Für das Messverfahren sind mehrere Kameras montiert und vom Computer fernsteuer- und synchronisierbar zu bedienen.

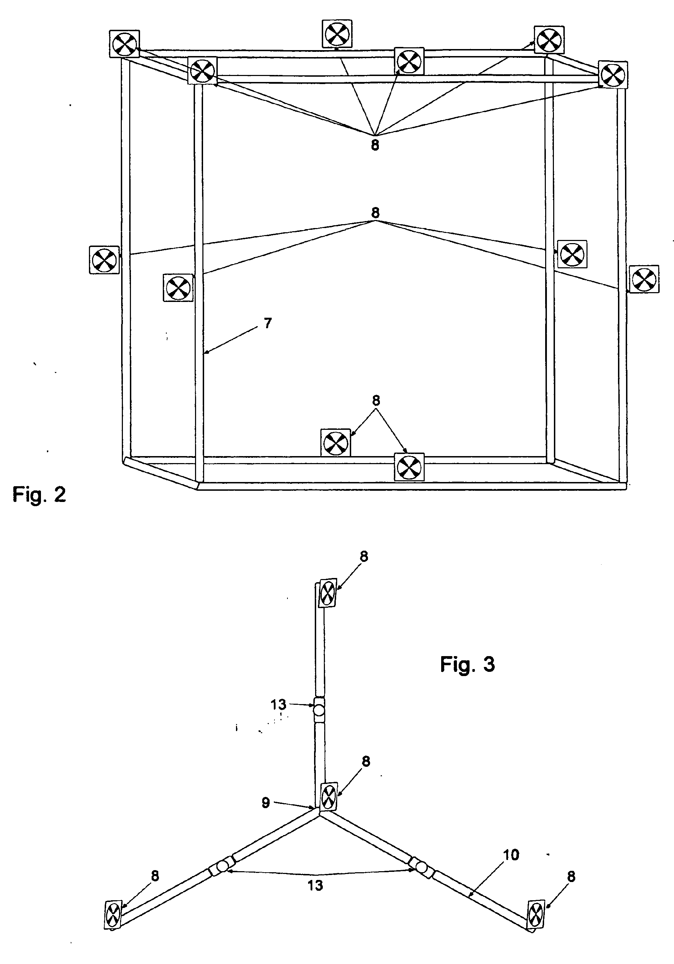

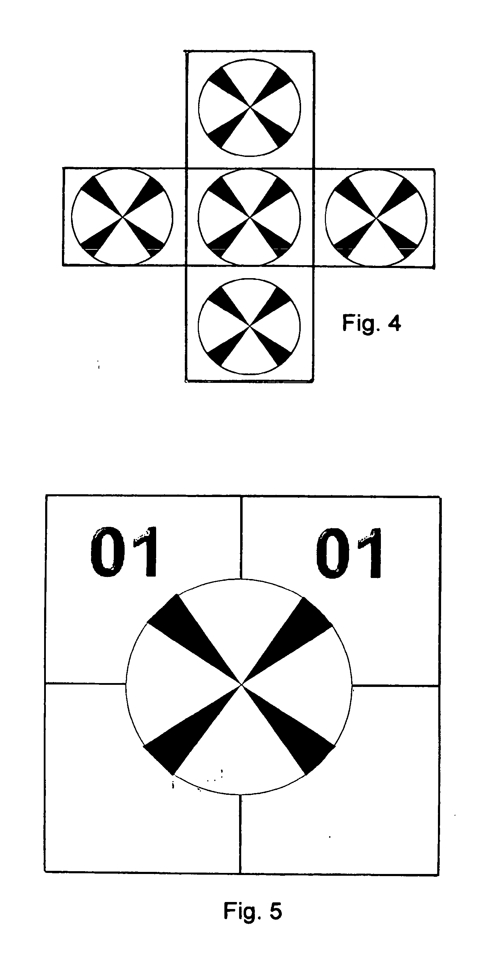

Mittelgroße Objekte, wie z.B. Maschinenbauteile, können in einem stationären Messraum oder mit dem Messkäfig 7 der Fig. 2 vermessen werden, in dem man sie in den Käfig hineinbringt. Dieses Messvolumen weist eine Reihe einmalig kalibrierter Messmarkentafeln der Fig. 5 auf, die Teile eines Stecksystems sind. Mindestens drei, vorzugsweise sechs bis neun auseinander liegende Messmarkentafeln des Käfigs für die x-, y- und z-Richtung werden zusammen mit dem Objekt in einer definierten Aufnahmeserie abgelichtet und mit einem Computer die Auswertung bzw. Vermessung vorgenommen. Eine fahrbare Objektaufnahmeeinheit, bestehend aus zwei Kameras und ggfs. einem Musterprojektor (für kontrastarme Objektoberflächenstrukturen) und evtl. einem PC, die vorher einmalig kalibriert wurde, erlaubt das Heranfahren z.B. an Fertigungslinien, um eine Qualitätskontrolle (IST-SOLL Vergleich) vor Ort am Bauteil durchzuführen.

Die Brennweitenkalibrierung eines Varioobjektives erfolgt hierbei vollautomatisch im Rahmen der Objektvermessung. Die CCD-Chip-, die Gehäusekalibrierung und die Objektivverzeichnung und -kalibrierung sollten zuvor in der Kalibrier- und Objekfirermessungsstation der Fig. 1 erfolgt sein (Vorschlag eines mobilen Messvolumens). Die anzuordnende(n) Kamera(s) sind in Fig. 2 nicht dargestellt, da deren Position(en) nicht festgelegt zu werden braucht, gleichwohl ermittelt die Orientierung der Aufnahmen deren Lage bzw. Position(en) im Messvolumen.

Das mobile dreiachsige Koordinatengestell der Fig. 3 besteht aus drei Profilstäben 10, die an einem mit Eckverstärkungen versehenden Eckknotenpunkt 9 zusammengeführt sind. Die drei Profilstäbe bilden geometrisch exakt die x-, y- und z-Achse ab. Das dreiachsige Koordinatengestell ist für den Transport zerlegbar und kann über eine Steckoder Gelenkverbindung, vorzugsweise einer starren Exzenter-Gelenkverbindung in Betriebsstellung geklappt werden. Es weist am Ende der Profilstäbe sowie im Eckknotenpunkt 9 Passpunktfestkörper 8 auf, die mit eingemessenen Messmarkentafeln der Fig. 5 versehen sind. Das dreiachsige Koordinatengestell ist in seiner Dimensionierung auf die Objektgröße abgestimmt und wird an das zu vermessende Objekt herangetragen. Die Brennweitenkalibrierung erfolgt vollautomatisch im Rahmen der Objektvermessung. Die CCD-Chip-, die Gehäusekalibrierung und die Objektiverzeichnung und -kalibrierung der digitalen Kamera, sollte zuvor in der Kalibrier- und Objektvermessungsstation der Fig. 1 (kalibriertes Messvolumen) erfolgt sein, welches aber auch vor Ort (,calibration on the job') erfolgen kann. Die Aufnahmekameras, auch unterschiedlicher Bauarten, sind in Fig. 3 nicht dargestellt, da deren Standort nicht festgelegt zu werden braucht.

Durch die Verwendung eines mobilen Passpunktkoordinatensystems brauchen an das Messobjekt selber keine Passpunktmarkierungen aufgebracht zu werden, so dass das erfindungsgemäße Verfahren auch zur vollautomatischen und berührungsfreien Bauteilvermessung an industriellen Fertigungslinien, beim Prototyping und bei IST-SOLL Vergleichen einzusetzen ist.

Die Anzahl der definierten Passpunktfestköper oder Messkreuze des Messvolumens ist durch die geforderte Messgenauigkeit am Objekt sowie durch die Pixelauflösung und die Brennweite der eingesetzten Kamera(s) festzulegen.

Es sind auch Kameras unterschiedlichen Bautyps mit unterschiedlichen Brennweiten einsetzbar, da das Verfahren in der Lage ist, die für jede Kamera exakten Werte (z.B. Brennweite, Objektiverzeichnung, Bildhauptpunktlage etc.) automatisch zu ermitteln, auch bei eingeschalteten Autofokus.

Es besteht die Möglichkeit, dass man die einzelnen Befehle zur Ausführung der verschiedenen Verfahrensschritte in einer einfach zu bedienenden auch branchenspezifisch anpassbaren Software kleidet und mit dieser die Tätigkeiten des Computers steuert.

Die Fig. 4-5 zeigen Messmarken mit keilförmiger Struktur. Der Vorteil dieser Struktur liegt darin begründet, dass sie sowohl für Nah- und Fernaufnahmen geeignet sind, indem die bei Fernaufnahmen beginnende zentrische Unschärfe dadurch ausgeglichen wird, dass das Messfadenkreuz sich über den breiten Keilansatz noch zentrisch positionieren lässt. Dadurch entfällt die Vorhaltung unterschiedlicher Größen von Messmarken.

Die Kalibriertafel der Fig. 6 dient zur Kalibrierung des CCD-Chips, des Kameragehäuses, der Objektiverzeichnung und der Ermittlung der Bildhauptpunktlage. Die Kalibriertafel enthält zweckmäßigervveise eine Serie von präzisen Messmarken in definierter x- und y-Richtung, so dass darüber auch die Objektiv- bzw. Brennweitenkalibrierung bzw. -verzeichnung sowie die Bildhauptpunktlage, die für die Brennweite der Aufnahmeserie gilt, vollautomatisch ermittelt werden kann, sofern bei der Objektaufnahme eine dreidimensionale Anordnung von Passpunkten gegeben ist. Die Vorteile dieser mobilen 2D-Kalibriertafel liegen darin begründet, dass nunmehr kein stationäres 3D-Kalibrierfeld für die Kamerakalibrierung, die Ermittlung der Objektiverzeichnung, der Brennweite und des Bildhauptpunktes bzw. - mittelpunktes benötigt wird. Die Kalibriertafel besteht aus einem hochstabilen Material, vorzugsweise im Sandwichaufbau:

Aluminium-Kunststoff-Aluminium, worauf das eigentliche Kalibrierfeld mit definierten Zielmarken, welche auf eine Folie aufgebracht worden ist, auflaminiert ist.

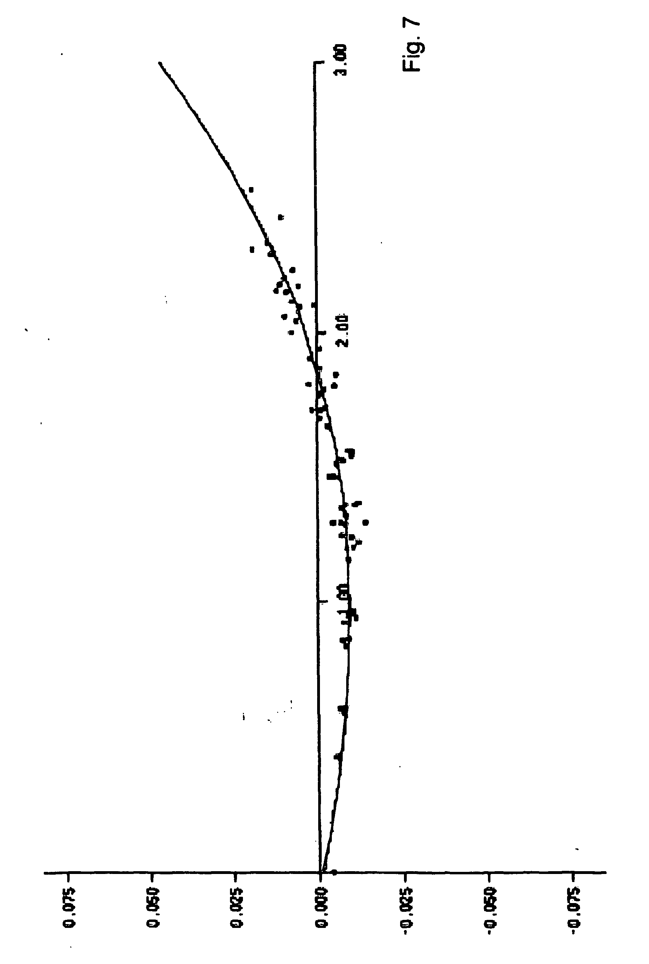

Die Fig. 7 zeigt ein Messergebnis der Objektiwerzeichnung in Form eines Polynoms 3. Grades nach Abschluss der Kalibrierung, bezogen auf der berechneten Bildhauptpunktlage. Auf der Rechtsachse ist der Radius, ausgehend vom Bildhauptpunkt (etwa Chipmitte), auf der Hochachse die Verzeichnung abgetragen; alle Werte in [mm]. Die Punkte stellen die Zielmarken der Kalibriertafel dar, der Graph das Polynom 3. Grades. Die radial-symmetrische Verzeichnung ist nicht konstant, sondern hängt von der Brennweite ab. Durch die Ableitung der Brennweite und der dazugehörigen Objektivverzeichnungswerte für vorher ermittelter Brennweitenstufen gelingt beim Vario- bzw. Zoomobjektiv neben der Ermittlung der vom Nutzer voreingestellten Brennweite auch die Ermittlung der dazugehörigen radial-symmetrischen Verzeichnungswerte, zudem braucht der Autofokus nicht abgeschaltet zu werden. Insofern braucht dieses Objektiv nicht mehr auf Anschlag voreingestellt zu werden, sondern der Nutzer wählt die für seine Aufnahme geeignete Brennweite stufenlos, was die Anzahl der Bilder einer Aufnahmeserie reduziert. Die Ableitung der Brennweite gelingt wie folgt:

Für die Bestimmung der Brennweite ist bei dem hier vorgestellten Verfahren wichtig, dass in jedem Bild eine hinreichend große Anzahl auch räumlich gut verteilter Passpunkte vorhanden ist. Diese dürfen insbesondere nicht alle in einer Ebene liegen, sondern müssen definiert in einem Raum verteilt angeordnet sein. Nun erfolgt die Messung der äußeren Orientierung, wobei zunächst der aus den Bilddateien (EXIF-Header) ausgelesene Wert der Brennweite benutzt werden kann. Nach der Ausgleichung mittels kleinster Quadrate liegen Werte für die Standardabweichung der Restfehler an den Passpunkten vor.

Ausgehend vom verwendeten Wert der Brennweite wird diese nun in kleinen Schritten von 0,1 mm sukzessive erhöht bzw. erniedrigt und jeweils die äußere Orientierung neu berechnet. Diejenige Brennweite, welche die geringste Standardabweichung der Restfehler aufweist, wird anschließend in die Bilddatei eingetragen und für alle weiteren Auswertungen verwendet. Über eine Staffelung von Aufnahmen der Kalibriertafel (Fig. 6) mit unterschiedlichen Brennweiten ergeben sich unterschiedliche Koeffizienten der jeweiligen Polynome 3. Grades. Dadurch wird es möglich jegliche vom Nutzer voreingestellte Brennweite nebst Verzeichnungswerte rechnerisch zu ermitteln. Ein Varioobjektiv wird somit stufenlos für messtechnische Aufnahmen einsetzbar.

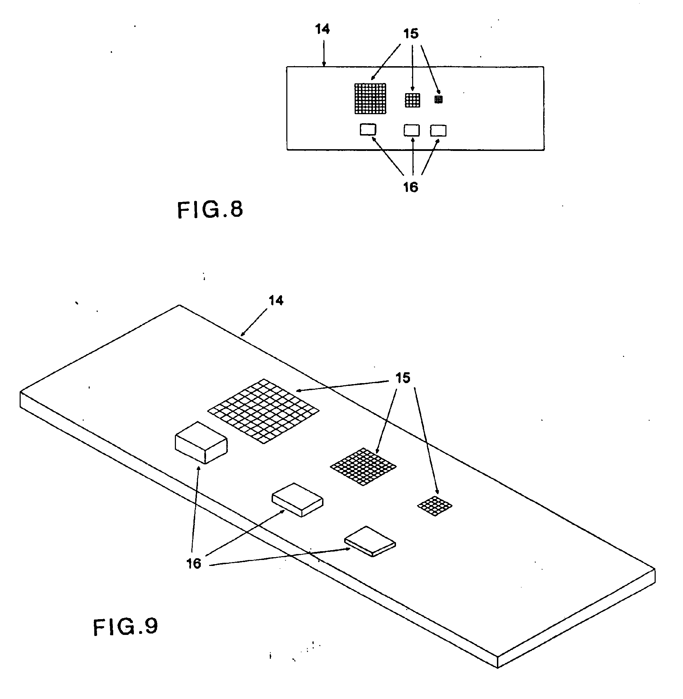

In der Fig. 8 ist eine Planaufsicht auf eine 3D-Kalibriermesstafel/ -platte 14 dargestellt, die in der Fig. 9 in perspektivischer Ansicht (überhöht) gezeigt ist. Diese ist für die verfahrensmäßig notwendige Kalibrierung der Kamera und der Vermessung des Objektes durch Stereomikroskope und -lupen geeignet und hierfür neu entwickelt worden. Die 3D-Kalibriermessplatte 14 stellt das für die Kalibrierung und Vermessung mit einer Kamera notwendige Messvolumen zur Verfügung. Es besteht hier aus drei beabstandet nebeneinander auf einer Platte angeordneten definierten Rasterlinien (x- und y-Koordinaten), vergleichbar in ihrer Funktion mit der beschriebenen Kalibriertafel der Fig. 6, in unterschiedlichen Maßstäben (abhängig von der gewählten Vergrößerungsstufe) und einem vor einer Seite jeden Rasters angeordneten Mikrokörpers 16 definierter Höhe, welcher die z-Koordinate des Messvolumens in Abhängigkeit von der Tiefenschärfe der gewählten Mikroskopauflösung bildet. Der Rastermaßstab ist in Abhängigkeit von der Mikroskopauflösung zu wählen.

Liste der Bezugszeichen

| 1 | Kalibriertafel |
| 2 | Objektplattformträger (horizontale x/z-Ebene) |
| 3 | Trägerprofile |
| 4 | Digitalkamera |
| 5 | Kalibrier- und Objektträgeraufnahme- und 3D-photogrammetrische Vermessungsstation für kleine Objekte |
| 6 | Passpunktfestkörper mit mehreren messbaren Messmarkenflächen alle in keilförmiger Ausprägung |
| 7 | 3D-photogrammetrischer Brennweitenkalibrier- und Messkäfig, mit eingemessenen Messmarkentafeln für mittlere Objektgrößen |
| 8 | würfelförmiger Passpunktfestkörper mit Messmarkentafeln |
| 9 | Eckknotenpunkt |
| 10 | dreiachsiges Koordinatengestell mit eingemessenen Messmarkentafein für große Objekte |
| 11 | Trägerrückwand (vertikale x/y-Ebene) |
| 12 | Kameraaufhängungsprofilträger (schwenk- und kippbar) |
| 13 | Exzenter-Gelenke |
| 14 | 3D-Kalibriermessplatte |
| 15 | Rasterlinien unterschiedlicher Maßstäbe für x-, y-Koordinaten (für Kalibrierung, vgl. Fig.6) |
| 16 | Mikrokörper mit definierter Höhe (z-Koordinate des Messvolumens) |

**Patentansprüche**

1. Verfahren zur Vermessung von Objekten mit einer Kamera durch Aufnahme und spätere Auswertung einer Serie von Objektaufnahmen aus mindestens zwei verschiedenen Richtungen, bei dem

   - man mindestens eine herkömmliche Digitalkamera mit Vario- bzw. Zoomobjektiv als Aufnahmesystem verwendet;
   - man die Objektiwerzeichnung und die Bildhauptpunktlage mit einer Kalibriertafel ermittelt;
   - man mit diesem Aufnahmesystem das Objekt gleichzeitig mit einem Passpunktkoordinatensystem aufnimmt, das mindestens sechs gut verteilte und räumlich angeordnete Passpunkte aufweist;
   - man die Brennweite ermittelt, indem man ausgehend vom verwendeten Wert der Brennweite die Brennweite rechnerisch in kleinen Schritten sukzessive erhöht bzw. erniedrigt, die jeweils resultierende Standardabweichung an den Passpunkten ermittelt und diejenige Brennweite ermittelt, bei der die Standardabweichung ihren kleinsten Wert erreicht; und
   - man unter Berücksichtigung der ermittelten Brennweite, Objektivverzeichnung und der Bildhauptpunktlage das zu vermessende Objekt vermisst.

2. Verfahren nach Anspruch 1 bei dem man vor der Vermessung einmalig die Objektiwerzeichnungen der verwendeten Kamera für die zu verwendenden Brennweiten ermittelt.

3. Verfahren nach Anspruch 1 oder 2, bei dem man die Ermittlung der Brennweite, der Objektiwerzeichnung, der Bildhauptpunktlage und / oder die Auswertung der Daten auf einem Computer mit einer prozesssteuernden Software vornimmt.

4. Verfahren nach Anspruch 1, bei dem man für die Vermessung von sich bewegenden Objekten ein Zwei-Kamerasystem verwendet.

5. Verfahren nach Anspruch 4, bei dem man mit den beiden Kameras eine dicht hintereinander liegende Bildfolge oder ein Video aufnimmt und aus dieser ein korrespondierendes Bildpaar für die Kalibrierung und die Vermessung heraussucht und der Vermessung zugrunde legt.

6. Verfahren nach Anspruch 4 oder 5, bei dem die zwei Kameras synchron geschaltet sind.

7. Verfahren nach Anspruch 1, bei dem man für die Ermittlung der Objektiwerzeichnung und der Bildhauptpunktlage eine Kalibriertafel verwendet, deren Kalibrierungsmarken mit Digitaldruck mit UV-Tinte auf Polyesterfolie aufgebracht worden sind, wobei die Polyesterfolie auf einer masshaltigen Unterlage fest angeordnet ist.

8. Verfahren nach Anspruch 1, bei dem man bei einer strukturarmen Oberfläche des zu vermessenden Objektes die Objektoberfläche vor der Vermessung zur besseren Erkennbarkeit behandelt.

9. Verfahren nach einem der vorangehenden Ansprüche, bei dem man als Passpunktkoordinatensystem
   für kleine Objekte eine auf einem Objektträger mit definierten, zusätzlichen Passpunktfestkörpern oder eine dreidimensionale Nanostruktur,
   für mittelgrosse bis große Objekte einen mit Messmarken versehenen Kalibrierkäfig oder ein mit Messmarken versehenes dreistrahliges Koordinatengestell,
   für terrestrische und atmosphärische Objekte Bodenmarkierungen in x-, y-Richtung und in z-Richtung definiert fliegende oder schwebende Objekte als kombiniertes Luft-/ Bodenmessvolumen verwendet.

10. Verfahren nach Anspruch 9, bei dem man die Genauigkeit eines Passpunktfestkörpers erhöht, indem, man dreidimensionale Messmarken verwendet.

11. Verfahren nach Anspruch 10, bei dem man als Messmarken keilförmige Messmarken verwendet.

12. Verfahren nach Anspruch 10, bei dem man würfelförmige Passpunktfestkörper als Messmarken verwendet, die definierte Messmarkenstrukturen auf den Festkörperflächen besitzen.

13. Verfahren nach Anspruch 9, bei dem man für Nahbereichs- und Luftbildaufnahmen kugelförmige Messmarken verwendet.

**Claims**

1. Method for measuring objects with a camera by recording and later evaluating a series of pictures of objects from at least two different directions, in which

   - at least one conventional digital camera with a vario or zoom lens is used as the recording system;
   - the lens distortion and the main point position of the image are determined using a calibration table;
   - using this recording system, the object is simultaneously recorded with a control point coordinate system, which has at least six well distributed and spatially arranged control points;
   - the focal length is determined in that proceeding from the value of the focal length used, the focal length is successively increased or reduced by computing in small steps, the respectively resulting standard deviation is determined at the control points and the respective focal length is determined at which the standard deviation reaches its smallest value; and
   - taking into account the determined focal length, lens distortion and main point position of the image, the object to be measured is measured.

2. Method according to claim 1, in which the lens distortions of the camera used are determined once for the focal lengths to be used prior to measurement.

3. Method according to claim 1 or 2, in which the focal length, the lens distortion, the main point position of the image and/or the evaluation of the data are determined on a computer with a process-controlling software.

4. Method according to claim 1, in which a two-camera system is used to measure moving objects.

5. Method according to claim 4, in which an image sequence located closely behind one another or a video is recorded with the two cameras and a corresponding image pair is found therefrom for the calibration and measurement and is used as a basis for the measurement.

6. Method according to claim 4 or 5, in which the two cameras are connected synchronously.

7. Method according to claim 1, in which to determine the lens distortion and the main point position of the image, a calibration table is used, the calibration marks of which are applied with digital printing with UV ink on polyester film, the polyester film being rigidly arranged on a dimensionally stable support.

8. Method according to claim 1, in which the object surface is treated prior to measurement for better recognisability in the case of a surface with little structure of the object to be measured.

9. Method according to any one of the preceding claims, in which, as the control point coordinate system, a nanostructure on an object carrier with defined, additional control point solid bodies or a three-dimensional nanostructure is used for small objects, a calibration cage provided with measurement marks or a three-beam coordinate frame provided with measurement marks is used for medium-sized to large objects, and for terrestrial and atmospheric objects, base markings in the x-, y-direction and objects flying or hovering in a defined manner in the z-direction are used as a combined air/base measuring volume.

10. Method according to claim 9, in which the precision of a control point solid body is increased in that three-dimensional measurement marks are used.

11. Method according to claim 10, in which wedge-shaped measurement marks are used as measurement marks.

12. Method according to claim 10, in which cubic control point solid bodies are used as measurement marks, which have defined measurement mark structures on the solid body faces.

13. Method according to claim 9, in which spherical measurement marks are used for close range and aerial pictures. The invention relates to a method for measuring objects with a camera by recording and subsequently evaluating a series of pictures of objects from at least two different directions.

**Revendications**

1. Procédé de mesure d'objets à l'aide d'une caméra par prise de vues et évaluation ultérieure d'une série de prises d'objets prise à partir d'au moins deux directions différentes, dans le cadre duquel

   ♦ on utilise au moins une caméra numérique classique à objectif variable et/ou à objectif zoom en tant que système de prise de vues,
   ♦ on détermine la distorsion de l'objectif et la situation des points principaux de l'image à l'aide d'un tableau d'étalonnage;
   ♦ on prend, grâce à ce système de prise de vues, l'objet simultanément avec un système de coordonnées de points de passage, qui contient au moins six points de passage bien répartis et bien disposés dans l'espace;
   ♦ on détermine la distance focale, en augmentant et/ou en diminuant successivement par calcul en petits incréments la distance focale à partir de la valeur utilisée de la distance focale, en déterminant à chaque fois l'écart-type résultant aux points de passage et en déterminant la distance focale, pour laquelle l'écart-type atteint sa valeur la plus petite; et
   ♦ on mesure l'objet à mesurer en prenant en compte la distance focale déterminée, la distorsion de l'objectif et la situation des points principaux de l'image.

2. Procédé selon la revendication 1, dans le cadre duquel, avant la mesure, on détermine à une reprise les distorsions de l'objectif de la caméra utilisée pour les distances focales à utiliser.

3. Procédé selon la revendication 1 ou 2, dans le cadre duquel l'on procède à la détermination de la distance focale, de la distorsion de l'objectif, de la situation des points principaux de l'image et/ou à l'évaluation des données sur un ordinateur à l'aide d'un logiciel de commande de processus.

4. Procédé selon la revendication 1, dans le cadre duquel l'on utilise, pour la mesure d'objets en mouvement, un système à deux caméras.

5. Procédé selon la revendication 4, dans le cadre duquel l'on enregistre, à l'aide des deux caméras, une séquence d'images fortement rapprochées les unes des autres ou une séquence vidéo, et dans le cadre duquel l'on extrait de ces dernières une paire d'images correspondante pour l'étalonnage et pour la mesure et dans le cadre duquel l'on utilise celle-ci pour la mesure.

6. Procédé selon la revendication 4 ou 5, dans le cadre duquel les caméras sont branchées de manière synchrone.

7. Procédé selon la revendication 1, dans le cadre duquel l'on utilise, pour la détermination de la distorsion de l'objectif et de la situation des points principaux de l'image, un tableau d'étalonnage, dont des marques d'étalonnage ont été appliquées par impression numérique à l'aide d'une encre UV sur une feuille de polyester, la feuille de polyester étant fermement disposée sur un support à dimensions exactes.

8. Procédé selon la revendication 1, dans le cadre duquel l'on traite, dans le cas d'une surface pauvre en structures de l'objet à mesurer, la surface de l'objet avant la mesure, pour une meilleure détection.

9. Procédé selon l'une quelconque des revendications précédentes, dans le cadre duquel l'on utilise, en tant que système de coordonnées de points de passage,

   ♦ dans le cas de petits objets, une nano-structure avec des corps solides de points de passage supplémentaires définis sur un porte-objet ou une nano- structure tri-dimensionnelle,
   ♦ dans le cas d'objets de taille moyenne à grande taille, une cage d'étalonnage pourvue de marques de mesure ou un arrangement de coordonnées à trois faisceaux pourvu de marques de mesure,
   ♦ dans le cas d'objets terrestres et atmosphériques, des marquages au sol dans des objets volants ou planants définis dans les directions x, y et z, en tant que volumes de mesure air/sol combinés.

10. Procédé selon la revendication 9, dans le cadre duquel la précision d'un corps solide de points de passage augmente dans le cas de l'utilisation de marques de mesure tridimensionnelles.

11. Procédé selon la revendication 10, dans le cadre duquel l'on utilise, en tant que marques de mesure, des marques de mesure en forme de coins.

**12.** Procédé selon la revendication 10, dans le cadre duquel l'on utilise, en tant que marques de mesure, des corps solides de points de passage en forme de cubes, qui possèdent des structures de marquage de mesure définies sur les surfaces des corps solides.

**13.** Procédé selon la revendication 9, dans le cadre duquel l'on utilise des marques de mesure en forme de billes pour les prises de vue dans le domaine rapproché et pour les prises de vue aériennes.

Fig. 1

Fig. 2

Fig. 3

EP 1 759 166 B1

Fig. 4

Fig. 5

16

FIG. 6

EP 1 759 166 B1

17

Fig. 7

14

15

16

FIG.8

14

15

16

FIG.9

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5852672 A
- EP 1174681 A

**In der Beschreibung aufgeführte Nicht-Patentliteratur**

- **J. HEIKKILA ; O. SILVEN.** Calibration Procedure for Short Focal Length Off-The-Shelf CCD-Cameras. *Proceedings of the 13th International Conference on Pattern Recognition,* 1996, 166-170